(19) Europäisches Patentamt / European Patent Office / Office européen des brevets

(11) **EP 3 919 259 B1**

(12) **EUROPEAN PATENT SPECIFICATION**

(45) Date of publication and mention
of the grant of the patent:
**25.02.2026 Bulletin 2026/09**

(21) Application number: **20748499.9**

(22) Date of filing: **30.01.2020**

(51) International Patent Classification (IPC):
**F16L 11/06** *(2006.01)*    **F16L 11/12** *(2006.01)*
**B29C 61/08** *(2006.01)*    **B29K 27/12** *(2006.01)*

(52) Cooperative Patent Classification (CPC):
**F16L 11/06; F16L 11/12; B29C 61/08;
B29K 2027/12**

(86) International application number:
**PCT/JP2020/003402**

(87) International publication number:
**WO 2020/158854 (06.08.2020 Gazette 2020/32)**

## (54) HEAT-SHRINKABLE TUBE HAVING TEARABILITY

WÄRMESCHRUMPFBARER SCHLAUCH MIT REISSBARKEIT

TUBE THERMORETRACTABLE AVEC DÉCHIRABILITÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.01.2019   JP 2019015563
04.02.2019   JP 2019017799
13.09.2019   JP 2019167695**

(43) Date of publication of application:
**08.12.2021 Bulletin 2021/49**

(73) Proprietor: **Junkosha Inc.
Kasama-shi, Ibaraki 309-1603 (JP)**

(72) Inventors:
• **SUZUKI Masahiro
Kasama-shi Ibaraki 309-1603 (JP)**
• **KIMURA Yasuyuki
Kasama-shi Ibaraki 309-1603 (JP)**

(74) Representative: **Kiwit, Benedikt
Mitscherlich PartmbB
Patent- und Rechtsanwälte
Karlstraße 7
80333 München (DE)**

(56) References cited:
EP-A1- 0 494 679    EP-A1- 2 749 802
EP-A1- 3 311 982    WO-A1-2013/077452
JP-A- 2010 253 729    JP-A- 2014 136 756
JP-A- 2016 169 856    JP-A- H02 258 324
JP-A- H08 216 252    JP-A- H08 216 252

**Description**

[Technical Field]

The present invention relates to a heat-shrinkable tube capable of being easily torn in a longitudinal direction thereof.

[Background Art]

A tube capable of being easily torn in a longitudinal direction thereof serves as a protective member for various articles until the use thereof. In particular, a tearable tube made of a fluororesin exhibits the properties of a fluororesin, such as heat resistance, chemical resistance, water and oil repellency, non-tackiness, self-lubrication, and the like, which cannot be obtained using a hydrocarbon-based synthetic resin. The tube having such properties is used as a protective tube for precision devices, electronic parts, etc., or a medical-device introduction tube for introducing a catheter, a guide wire, etc. into the body.

A tube having tearability, further imparted with heat shrinkability, functions to assuredly protect an article placed therein without breaking, and is also used as a jig for manufacturing a catheter. A heat-shrinkable tube having tearability may be easily torn and removed without the need to use a special tool when it is no longer needed. For example, US 2015 / 0 354 732 A2 discloses a heat-shrinkable tube having tearability made of a fluororesin mixture. However, since the tube is easily torn, there is a problem in that the tube is liable to burst in the process of expanding the tube to increase the diameter thereof in order to impart heat shrinkability to the tube, making it difficult to realize stable production.

EP 2 749 802 A1 discloses a heat-shrinkable tube having tearability, which contains melt-processible fluorine resin (THV + Kynar), and describes the tube having good heat shrinkability. JP H08 - 216 252 A discloses a tube containing melt-processible fluorine resin (THV) and describes a tute having good toughness such as tearability strength, etc. by radiating ionizing radiation, etc. EP 3 311 982 A1 discloses a heat-shrinkable tube having tearabiltiy, which contains melt-processible fluorine resin (FEP), and describes that the tube gets to have tearability by containing the PTFE of 0.05wt% ~3wt%. EP 0 494 679 A1 discloses a laminated-layer tube containing melt-processible fluorine resin (THV), and describes that a heat-shrinkable tube is produced by radiating ionizing radiation, etc. on outer layer of the tube and crosslinking the heat-shrinkable tube.

[Disclosure]

[Technical Problem]

The present invention is intended to provide a heat-shrinkable tube capable of being easily torn in a longitudinal direction thereof, particularly a tube, which is less likely to burst in the process of expanding the tube to increase the diameter thereof during manufacture thereof, thus making it possible to realize stable production.

[Technical Solution]

Accordingly, the present inventors discovered the fact that, when the mechanical property curve obtained in a tensile test of a tube, among the mechanical properties of the tube, falls within a specific range, the tube is less likely to burst in the process of expanding the tube to increase the diameter thereof during manufacture of the tube, thus making it possible to realize stable production, thereby culminating in the present invention.

Below is a description of the present invention, which is defined by the heat-shrinkable tubes having tearability according to independent claims 1 and 4.

The tube of the present invention is a heat-shrinkable tube having tearability containing at least a melt-processable fluororesin, in which the strain of the tube is represented as $\varepsilon$, the stress at the strain is represented as $\sigma$ (MPa), the horizontal axis on a coordinate graph is the strain $\varepsilon$, the vertical axis thereon is the stress $\sigma$, and each of the segment ab and the segment cd defined by four coordinate points on the graph, a (0.4, 8.8), b (0.4, 2.4), c (1.0, 9.9), and d (1.0, 3.2), intersects the mechanical property curve of the tube obtained through the following measurement method. As such, the tube is less likely to burst in the process of expanding the tube, making it easy to obtain a reliable tube. The mechanical property curve is determined by performing a tensile test under the conditions of an ambient temperature of 60°C, an initial chuck-to-chuck distance of 22 ± 0.05 mm, and a tensile speed of 5 mm/sec.

In the mechanical property curve of the tube, the region defined by four coordinate points on the graph preferably intersects each of the segment a'b and the segment c'd defined by four coordinate points, a'(0.4, 7.6), b (0.4, 2.4), c'(1.0, 8.9), and d (1.0, 3.2).

The tube of the present invention is a heat-shrinkable tube having tearability containing at least a melt-processable fluororesin, in which the strain of the tube is represented as $\varepsilon$, the stress at the strain is represented as $\sigma$ (MPa), the horizontal axis on a coordinate graph is the strain $\varepsilon$, the vertical axis thereon is the stress $\sigma$, and in the mechanical property curve of the tube obtained through the above-mentioned measurement method, the stress $\sigma$ at the strain $\varepsilon$ of 1.0 is 3.2 MPa or more, and when the coordinate point at the strain $\varepsilon$ of 1.0 on the mechanical property curve is represented as e and the coordinate point at the strain $\varepsilon$ of 2.0 on the mechanical property curve is represented as f, the slope of a straight line passing through the coordinate point e and the coordinate point f is 2.4 to 3.0 MPa. Here, in the process of expanding the tube, the tube is less likely to burst, making it easy to obtain a reliable tube.

The fluororesin constituting the heat-shrinkable tube having tearability according to the present invention includes at least a resin including at least three monomers of tetrafluoroethylene, hexafluoropropylene, and vinylidene fluoride as constituent monomers. Examples of the resin including at least three monomers of tetrafluoroethylene, hexafluoropropylene, and vinylidene fluoride as constituent monomers may include tetrafluoroethylene-hexafluoropropylene-vinylidene fluoride copolymer (THV), tetrafluoroethylene-hexafluoropropylene-vinylidene fluoride-perfluoroalkyl vinyl ether copolymer, and the like.

The heat-shrinkable tube having tearability according to the present invention may include a plurality of fluororesins, so it may include another fluororesin, aside from the fluororesin including at least three monomers of tetrafluoroethylene, hexafluoropropylene, and vinylidene fluoride as constituent monomers. It is preferable that the resin including at least three monomers be contained in as large an amount as possible. The resin including at least three monomers of tetrafluoroethylene, hexafluoropropylene, and vinylidene fluoride as constituent monomers is contained in an amount of 25 wt% to 95 wt%. The resin including at least three monomers is more preferably contained in an amount of 40 wt% or more, and particularly preferably 50 wt% or more. When the fluororesin constituting the tube includes a plurality of resins each including at least three monomers of tetrafluoroethylene, hexafluoropropylene, and vinylidene fluoride as constituent monomers, the total amount of the plurality of resins is taken as the content.

In the fluororesin constituting the heat-shrinkable tube having tearability according to the present invention, the resin including at least three monomers of tetrafluoroethylene, hexafluoropropylene, and vinylidene fluoride as constituent monomers is a copolymer including 15 wt% to 25 wt% of vinylidene fluoride.

The heat-shrinkable tube having tearability according to the present invention preferably includes a plurality of fluororesins, and the maximum difference in refractive index (ASTM D542) between the plurality of fluororesins is preferably 0.05 or less. Here, the "fluororesin" of the plurality of fluororesins is a fluororesin contained in an amount of 3 wt% or more among the total fluororesins.

[Advantageous Effects]

According to the present invention, a heat-shrinkable tube can be stably produced without bursting of a tube in the process of expanding a tearable tube to increase the diameter thereof.

[Description of Drawings]

FIG. 1 illustrates the tearability of a tube of the present invention; and
FIG. 2 illustrates an example of the mechanical property curve of each of a conventional tube and the tube of the present invention.

[Mode for Invention]

Hereinafter, embodiments for carrying out the present invention will be described in detail. The embodiments described below are merely set forth to illustrate the present invention, and are not to be construed as limiting the invention, which is to be understood based on the claims. Moreover, the combination of features described in the embodiments is not always essential for the establishment of the present invention.

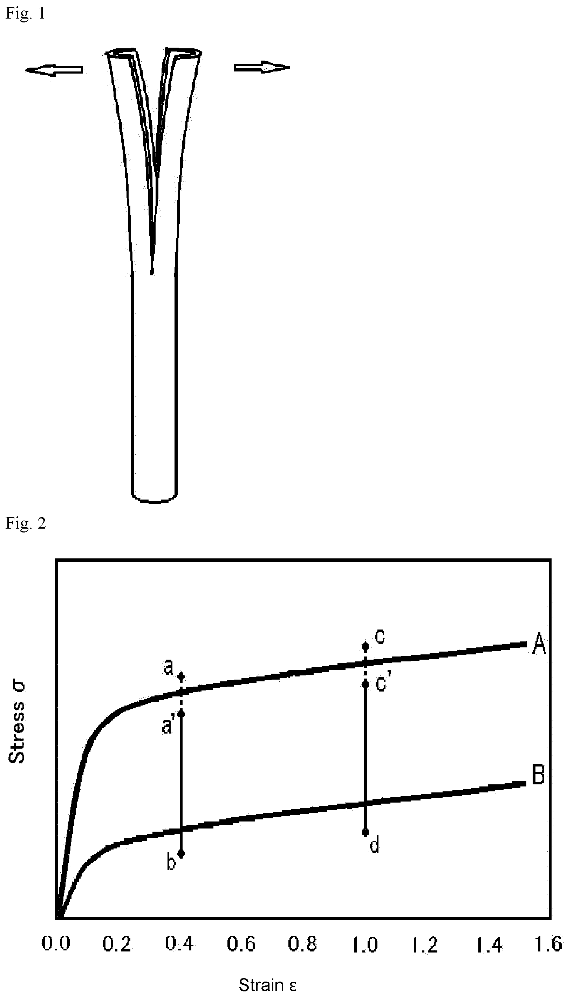

As illustrated in FIG. 1, the tube of the present invention is capable of being easily torn in the longitudinal direction thereof, and may be torn from one end of the tube to the opposite end of the tube. The tube may be notched as needed.

The tube of the present invention is also heat-shrinkable. In order to impart heat shrinkability to the tube, the tube may be processed through a general method. For example, the following method may be used.

[Material preparation]

A fluororesin that is melt-processable is used as a material for the tube of the present invention. Here, a plurality of resins may be used, and the mechanical properties of the tube of the present invention may be adjusted. Examples of the fluororesin that is commonly used include THV, tetrafluoroethylene-hexafluoropropylene copolymer (FEP), tetrafluoroethylene-perfluoroalkyl vinyl ether (PFA), ethylene-tetrafluoroethylene copolymer (ETFE), ethylene-tetrafluoroethylene-hexafluoropropylene copolymer (EFEP), polychlorotrifluoroethylene (PCTFE), and the like. The mixing of fluororesin materials may be performed by blending pellets using a tumbler or the like, but is more preferably carried out by forming pellets after melt-kneading using a twin-screw extruder. As such, a resin such as PTFE, which does not melt at high temperatures, may be added as an additive. Moreover, components that act as a compatibilizer in order to promote the dispersion of the resin, or additives that have other functions, such as crystallinity, adjustment of tube flexibility or tube hardness, improvement of mechanical properties, and the like, may also be added.

[Tube shaping]

The resin prepared above is melt-extruded into a tube shape using a single-screw extruder, and the tube thus obtained is a tube (hereinafter referred to as an original tube) which is a material for a heat-shrinkable tube.

[Expansion of original tube]

While the original tube is heated to a temperature equal to or higher than the glass transition temperature of the resin constituting the original tube, pressurized gas is injected therein, and the tube is pressurized from the inside to expand in the radial direction thereof. The tube is cooled while maintaining the pressurized state to obtain a heat-shrinkable tube.

Bursting that occurs in the conventional process of manufacturing a heat-shrinkable tube having tearability, which is to be solved in the present invention, takes place mainly when the tube is pressurized from the inside through heating in the process of expanding the original tube in the above-described manufacturing process.

FIG. 2 illustrates an example of the mechanical property curve of the tube on a graph, in which the strain $\varepsilon$ of the tube is plotted on the horizontal axis and the stress $\sigma$ (MPa) at the strain is plotted on the vertical axis. The curves A and B are preferred examples of the mechanical property curve of the heat-shrinkable tube having tearability according to the present invention. The curve A and the curve B intersect each of the segment ab and the segment cd, defined by four coordinate points. The curve B also intersects each of the segments a'b and c'd. In the heat-shrinkable tube having tearability according to the present invention with the mechanical properties represented by the curves A and B, the mechanical property curve intersects each of the segment ab and the segment cd, and it is difficult to cause bursting in the process of expanding the original tube. Moreover, when the mechanical property curve intersects each of the segments a'b and c'd, the tube is less likely to burst even when it is expanded instantaneously in the process of expanding the original tube, thus making it easy to obtain a reliable tube.

The heat-shrinkable tube having tearability according to the present invention preferably includes a plurality of fluororesins, and the maximum difference in refractive index (ASTM D542) between the plurality of fluororesins is preferably 0.05 or less. Here, the refractive index that is used is a measured value according to ASTM D542. The refractive index of the resin is related to the molecular structure of the resin. Fluororesins having similar refractive indexes have similar molecular structures, and when resins are blended, adhesion between resins may be obtained at the interface of the dispersed resins, which is more preferable.

In the heat-shrinkable tube having tearability according to the present invention, the stress $\sigma$ at the strain $\varepsilon$ of 1.0 on the mechanical property curve of the tube is 3.2 MPa or more, and when the coordinate point at the strain $\varepsilon$ of 1.0 on the mechanical property curve is represented as e and the coordinate point at the strain $\varepsilon$ of 2.0 on the mechanical property curve is represented as f, the slope of a straight line passing through the coordinate point e and the coordinate point f is preferably 2.4 to 3.0 MPa. Here, in the process of expanding the original tube, the tube is less likely to burst, making it easy to obtain a reliable tube.

The invention will be described in more detail with reference to the following examples.

Examples

<Tensile test>

[Measurement sample]

A measurement sample of the tube was manufactured through the following method.

Manufacture of measurement sample: A tube was sandwiched between polyimide films having a smooth surface and melt-pressed using a hot press to obtain a film having a thickness of 0.10 to 0.12 mm. A specific embodiment of film production is described below. The tubes cut depending on the size of the film to be produced were arranged, sandwiched between polyimide films having a smooth surface, heated to a temperature 20°C to 50°C higher than the melting point of the fluororesin having the highest melting point among the plurality of fluororesins constituting the tube using a hot press, and primarily melt-pressed to obtain a preformed film having a thickness of about 0.2 mm. The preformed film thus obtained was divided radially into four from the center of the film, the quartered films were stacked while changing the direction of the film, sandwiched again between the polyimide films having a smooth surface, heated to a temperature 20°C to 50°C higher than the melting point of the fluororesin having the highest melting point among the plurality of fluororesins constituting the tube using a hot press, and secondarily melt-pressed to obtain a film having a thickness of 0.1 to 0.12 mm. The film thus obtained was allowed to stand at room temperature until the next day, and was then punched in a dumbbell shape according to ASTM D1708 to prepare a measurement sample.

[Measurement method]

A tensile test was performed on the tube measurement sample using a tensile tester. The measurement was performed under the conditions of a measurement temperature of 60°C, an initial chuck-to-chuck distance of 22 mm $\pm$ 0.05 mm, and a tensile speed of 5 mm/sec. The other conditions were in accordance with ASTM D1708. The measured strain was calculated based on the following Equation 1. Also, the strain of the tube is represented as $\varepsilon$, the stress at the strain is represented as $\sigma$ (MPa), the horizontal axis on the coordinate graph is the strain $\varepsilon$, and the vertical axis thereon is the stress $\sigma$, whereby the mechanical property curve of the tube is created.

[Equation 1]

$$Strain \; \varepsilon = \frac{increase \; in \; chuck-to-chuck \; distance}{initial \; chuck-to-chuck \; distance}$$

[Material preparation]

In each of Examples and Comparative Examples, resins including components at the following mixing ratios were prepared.

Example 1

THV (containing about 17 wt% of VDF): 80 wt%

FEP (FEP 130-J manufactured by Chemours-Mitsui Fluoroproducts Co. Ltd.): 20 wt%

Example 2

THV (containing about 20 wt% of VDF): 75 wt%

FEP (FEP NP-3180 manufactured by Daikin Industries, Ltd.): 25 wt%

Example 3

THV (containing about 22 wt% of VDF): 50 wt%

PFA (PFA AP-202 manufactured by Daikin Industries, Ltd.): 50 wt%

Example 4

THV (containing about 20 wt% of VDF): 25 wt%

FEP (FEP 9494X manufactured by Chemours-Mitsui Fluoroproducts Co. Ltd.): 75 wt%

Example 5

THV (containing about 22 wt% of VDF): 90 wt%

PFA (PFA 420HP-J manufactured by Chemours-Mitsui Fluoroproducts Co. Ltd.): 10 wt%

Example 6

THV (containing about 20 wt% of VDF): 60 wt%

THV (containing about 17 wt% of VDF): 20 wt%

FEP (FEP 130-J manufactured by Chemours-Mitsui Fluoroproducts Co. Ltd.): 20 wt%

Example 7

THV (containing about 20 wt% of VDF): 90 wt%

ETFE (ETFE C88AX-P manufactured by Asahi Glass Co. Ltd.): 10 wt%

The materials prepared at the mixing ratios of Examples and Comparative Examples were sufficiently stirred using a tumbler and pelletized using a twin-screw extruder having a cylinder diameter of 20 mm.

[Formation of original tube]

The material pellets prepared in each of Examples and Comparative Examples were formed into a tube using a single-screw extruder having a cylinder diameter of 20 mm, and the tube thus obtained was used as an original tube for a heat-shrinkable tube.

[Expansion of original tube]

The original tube was expanded in the radial direction by injecting pressurized nitrogen into the tube while performing heating from outside the tube to pressurize the inside of the tube. The tube was cooled while maintaining the internal pressure of the tube to obtain a heat-shrinkable tube.

[Expansion test of original tube]

The original tube was expanded by injecting pressurized nitrogen into the tube while performing heating from outside the tube to pressurize the inside of the tube and then by performing pressurization instantaneously until the inner diameter of the tube was expanded more than 300% of the original diameter thereof. Here, the burst probability of the tube is shown in Table 1 below. When the burst probability upon expansion under the present conditions is about 20%, it is regarded as the numerical value at which the product may be produced stably in the expansion process during manufacture of a product, and when the burst probability is as low as 10%, the tube is less likely to burst, making it easy to obtain a more reliable tube.

The results of measurement for Examples and Comparative Examples are shown in Table 1 below.

[Table 1]

|  |  | Example 1 | Example 2 | Example 3 | Example 4 | Example 5 | Example 6 | Example 7 |
|---|---|---|---|---|---|---|---|---|
| Stress at strain ε of 0.4 on mechanical property curve | Mpa | 8.02 | 6.21 | 4.94 | 7.35 | 3.37 | 6.68 | 5.69 |
| Stress at strain ε of 1.0 on mechanical property curve | Mpa | 9.35 | 7.34 | 5.77 | 8.39 | 4.40 | 7.84 | 6.87 |
| Resin 1 Refractive index |  | 1.35 | 1.35 | 1.36 | 1.35 | 1.35 | 1.35 | 1.36 |
| Resin 2 Refractive index |  | 1.34 | 1.34 | 1.34 | 1.34 | 1.34 | 1.35 | 1.42 |
| Resin 3 Refractive index |  |  |  |  |  |  | 1.34 |  |
| Maximum refractive index difference |  | 0.01 | 0.01 | 0.02 | 0.01 | 0.01 | 0.01 | 0.06 |
| Burst probability | % | 8.4 | 3.2 | 5.8 | 6.5 | 6.7 | 5.1 | 7.9 |

In all of the tubes of Examples 1 to 7, the mechanical property curve intersected each of the segment ab and the segment cd, and in the expansion test of the original tube, the burst probability was low and stable expansion was possible. In particular, Examples 1 to 6 were made of fluororesin having a maximum refractive index difference of 0.05 or less between resins, and could be stably expanded even when the tube was expanded instantaneously because the internal pressure of the tube at the time of expansion was set high.

Example 8

Tubes were manufactured using THV (containing about 17 wt% of VDF, refractive index: 1.35) or THV (containing about 20 wt% of VDF, refractive index: 1.35) as THV and FEP 130-J or FEP 9494X as FEP at various mixing ratios. The materials thus prepared were sufficiently stirred using a tumbler and pelletized using a twin-screw extruder having a cylinder diameter of 20 mm. The material pellets thus obtained were extruded to DDR8-9 using a single-screw extruder having a cylinder diameter of 20 mm to prepare original tubes, which were then manufactured into heat-shrinkable tubes through the above method. In each of the tubes thus obtained, the stress σ at the strain ε of 1.0 on the mechanical property curve of the tube was 3.2 MPa or more, and the slope of a straight line passing through the coordinate point e at the strain ε of 1.0 and the coordinate point f at the strain ε of 2.0 fell in the range of 2.4 to 3.0 MPa. Moreover, based on the result of an expansion test, the burst probability was 20% or lower.

[Industrial Applicability]

In a heat-shrinkable tube having tearability according to the present invention, the tube is less likely to burst in the process of imparting heat-shrinkability to an original tube, making it easy to obtain a reliable tube. The tube of the present invention is useful as a medical-device introduction tube for introducing a catheter, a guide wire, etc. into the body, a jig used for manufacturing a catheter, and a tube for protecting precision devices, electronic parts, and the like.

**Claims**

1. A heat-shrinkable tube having tearability containing at least a melt-processable fluororesin, wherein the fluororesin comprises at least a resin comprising at least three monomers of tetrafluoroethylene, hexafluoropropylene, and vinylidene fluoride as constituent monomers, and the resin comprising at least three monomers of tetrafluoroethylene, hexafluoropropylene, and vinylidene fluoride as constituent monomers is contained in an amount of 25 wt% to 95 wt%,

**EP 3 919 259 B1**

**characterized in that**

a strain of the tube is represented as ε, a stress at the strain is represented as σ (MPa), a horizontal axis on a coordinate graph is a strain ε, a vertical axis thereon is a stress σ, and each of a segment ab and a segment cd defined by four coordinate points on the graph, a (0.4, 8.8), b (0.4, 2.4), c (1.0, 9.9), and d (1.0, 3.2), intersects a mechanical property curve of the tube obtained through a measurement method below,

(Measurement method)
a tensile test being performed under conditions of an ambient temperature of 60°C, an initial chuck-to-chuck distance of 22 ± 0.05 mm, and a tensile speed of 5 mm/sec,

wherein the measured strain is calculated based on the following Equation:

$$Strain \; \varepsilon = \frac{increase \; in \; chuck-to-chuck \; distance}{initial \; chuck-to-chuck \; distance},$$

and
the resin comprising at least three monomers of tetrafluoroethylene, hexafluoropropylene, and vinylidene fluoride as constituent monomers is a copolymer comprising 15 wt% to 25 wt% of vinylidene fluoride.

2. The heat-shrinkable tube having tearability according to claim 1, comprising a plurality of fluororesins, wherein a maximum difference in refractive index, measured according to ASTM D542, between the plurality of fluororesins is 0.05 or less.

3. The heat-shrinkable tube having tearability according to any one of the preceding claims, wherein each of a segment a'b and a segment c'd defined by four coordinate points on the graph, a'(0.4, 7.6), b (0.4, 2.4), c'(1.0, 8.9), and d (1.0, 3.2), intersects a mechanical property curve of the tube obtained through the measurement method.

4. A heat-shrinkable tube having tearability containing at least a melt-processable fluororesin, wherein the fluororesin comprises at least a resin comprising at least three monomers of tetrafluoroethylene, hexafluoropropylene, and vinylidene fluoride as constituent monomers, and the resin comprising at least three monomers of tetrafluoroethylene, hexafluoropropylene, and vinylidene fluoride as constituent monomers is contained in an amount of 25 wt% to 95 wt%, **characterized in that**
a strain of the tube is represented as ε, a stress at the strain is represented as σ (MPa), a horizontal axis on a coordinate graph is a strain ε, a vertical axis thereon is a stress σ, and in a mechanical property curve of the tube obtained through a measurement method below,

the stress σ at the strain ε of 1.0 is 3.2 MPa or more, and
when a coordinate point at the strain ε of 1.0 on the mechanical property curve is represented as e and a coordinate point at the strain ε of 2.0 on the mechanical property curve is represented as f,
a slope of a straight line passing through the coordinate point e and the coordinate point f is 2.4 to 3.0 Mpa,
(Measurement method)
a tensile test being performed under conditions of an ambient temperature of 60°C, an initial chuck-to-chuck distance of 22 ± 0.05 mm, and a tensile speed of 5 mm/sec, wherein the measured strain is calculated based on the following Equation:

$$Strain \; \varepsilon = \frac{increase \; in \; chuck-to-chuck \; distance}{initial \; chuck-to-chuck \; distance},$$

and
the resin comprising at least three monomers of tetrafluoroethylene, hexafluoropropylene, and vinylidene fluoride as constituent monomers is a copolymer comprising 15 wt% to 25 wt% of vinylidene fluoride.

5. The heat-shrinkable tube having tearability according to claim 4, comprising a plurality of fluororesins, wherein a maximum difference in refractive index, measured according to ASTM D542, between the plurality of fluororesins is 0.05 or less.

8

**Patentansprüche**

1.  Ein Schrumpfschlauch mit Reißbarkeit, der zumindest ein schmelzverarbeitbares Fluorharz enthält, wobei das Fluorharz zumindest ein Harz umfasst, das zumindest drei Monomere aus Tetrafluorethylen, Hexafluorpropylen und Vinylidenfluorid als konstituierende Monomere aufweist, und das Harz, das zumindest drei Monomere aus Tetrafluorethylen, Hexafluorpropylen und Vinylidenfluorid als konstituierende Monomere aufweist, in einer Menge von 25 Gew.-% bis 95 Gew.-% enthalten ist,
    **dadurch gekennzeichnet, dass**

    eine Dehnung des Schlauchs als ε dargestellt wird, eine Spannung bei der Dehnung als σ (MPa) dargestellt wird, die horizontale Achse eines Koordinatendiagramms eine Dehnung ε darstellt, die vertikale Achse eine Spannung σ darstellt, und jedes der Segmente ab und cd, die in dem Diagramm durch vier Koordinatenpunkte, a (0,4, 8,8), b (0,4, 2,4), c (1,0, 9,9) und d (1,0, 3,2), definiert sind, eine mechanische Eigenschaftskurve des Schlauchs schneidet, die durch ein unten beschriebenes Messverfahren erhalten wurde, wobei

    (Messverfahren)
    eine Zugprüfung unter folgenden Bedingungen durchgeführt wird:

    Umgebungstemperatur von 60°C, anfänglicher Abstand zwischen den Spannfuttern von 22 ± 0,05 mm und Zuggeschwindigkeit von 5 mm/s, wobei die gemessene Dehnung anhand der folgenden Gleichung berechnet wird:

    $$Dehnung\ \varepsilon = \frac{Zunahme\ des\ Abstands\ zwischen\ Spannfutter\ und\ Spannfutter}{urspr\ddot{u}nglicher\ Abstand\ zwischen\ Spannfutter\ und\ Spannfutter}$$

    wobei das Harz, das zumindest drei Monomere aus Tetrafluorethylen, Hexafluorpropylen und Vinylidenfluorid als konstituierende Monomere aufweist, ein Copolymer ist, welches 15 Gew.-% bis 25 Gew.-% Vinylidenfluorid enthält.

2.  Der Schrumpfschlauch mit Reißbarkeit nach Anspruch 1, aufweisend eine Mehrzahl an Fluorharzen, wobei eine maximale Brechungsindex-Differenz, gemessen gemäß ASTM D542, zwischen der Mehrzahl an Fluorharzen 0,05 oder weniger beträgt.

3.  Der Schrumpfschlauch mit Reißbarkeit nach einem der vorherigen Ansprüche, wobei jedes der Segmente a'b und c'd, die durch vier Koordinatenpunkte, a' (0,4, 7,6), b (0,4, 2,4), c' (1,0, 8,9) und d (1,0, 3,2) in dem Diagramm definiert sind, eine durch das Messverfahren erhaltene mechanische Eigenschaftskurve des Schlauchs schneidet.

4.  Ein Schrumpfschlauch mit Reißbarkeit, der zumindest ein schmelzverarbeitbares Fluorharz enthält, wobei das Fluorharz zumindest ein Harz umfasst, das zumindest drei Monomere aus Tetrafluorethylen, Hexafluorpropylen und Vinylidenfluorid als konstituierende Monomere aufweist, und das Harz, das zumindest drei Monomere aus Tetrafluorethylen, Hexafluorpropylen und Vinylidenfluorid als konstituierende Monomere aufweist, in einer Menge von 25 Gew.-% bis 95 Gew.-% enthalten ist,
    **dadurch gekennzeichnet, dass**

    eine Dehnung des Schlauchs als ε dargestellt wird, eine Spannung bei der Dehnung als σ (MPa) dargestellt wird, die horizontale Achse eines Koordinatendiagramms eine Dehnung ε darstellt, die vertikale Achse eine Spannung σ darstellt, und in einer mechanischen Eigenschaftskurve des Schlauchs, die durch ein unten beschriebenes Messverfahren erhalten wurde,

    die Spannung σ bei einer Dehnung ε von 1,0 3,2 MPa oder mehr beträgt, und,
    wenn ein Koordinatenpunkt bei der Dehnung ε von 1,0 auf der mechanischen Eigenschaftskurve als e und ein Koordinatenpunkt bei der Dehnung ε von 2,0 auf der mechanischen Eigenschaftskurve als f dargestellt wird,
    die Steigung einer Geraden, die durch den Koordinatenpunkt e und den Koordinatenpunkt f verläuft, 2,4 bis 3,0 MPa beträgt, wobei
    (Messverfahren)
    eine Zugprüfung unter folgenden Bedingungen durchgeführt wird:

Umgebungstemperatur von 60°C, anfänglicher Abstand zwischen den Spannfuttern von 22 $\pm$ 0,05 mm und Zuggeschwindigkeit von 5 mm/s, wobei die gemessene Dehnung anhand der folgenden Gleichung berechnet wird:

$$Dehnung \ \varepsilon = \frac{Zunahme\ des\ Abstands\ zwischen\ Spannfutter\ und\ Spannfutter}{ursprünglicher\ Abstand\ zwischen\ Spannfutter\ und\ Spannfutter}$$

wobei das Harz, das zumindest drei Monomere aus Tetrafluorethylen, Hexafluorpropylen und Vinylidenfluorid als konstituierende Monomere aufweist, ein Copolymer ist, welches 15 Gew.-% bis 25 Gew.-% Vinylidenfluorid enthält.

5. Der Schrumpfschlauch mit Reißbarkeit nach Anspruch 4, aufweisend eine Mehrzahl an Fluorharzen, wobei die maximale Brechungsindex-Differenz, gemessen gemäß ASTM D542, zwischen der Mehrzahl an Fluorharzen 0,05 oder weniger beträgt.

**Revendications**

1. Tube thermorétractable présentant une déchirabilité contenant au moins une fluororésine pouvant être transformée à l'état fondu, dans lequel la fluororésine comporte au moins une résine comportant au moins trois monomères de tétrafluoroéthylène, d'hexafluoropropylène et de fluorure de vinylidène en tant que monomères constitutifs, et la résine comportant au moins trois monomères de tétrafluoroéthylène, d'hexafluoropropylène et de fluorure de vinylidène en tant que monomères constitutifs est contenue en une quantité de 25 % en poids à 95 % en poids, **caractérisé en ce que**

une déformation du tube est représentée par ε, une contrainte à la déformation est représentée par σ (MPa), un axe horizontal sur un graphique de coordonnées est une déformation ε, un axe vertical sur celui-ci est une contrainte σ, et chacun d'un segment ab et d'un segment cd définis par quatre points de coordonnées sur le graphique, a (0,4, 8,8), b (0,4, 2,4), c (1,0, 9,9) et d (1,0, 3,2), croise une courbe de propriété mécanique du tube obtenue par un procédé de mesure ci-dessous,
(procédé de mesure)
un essai de traction réalisé dans des conditions de température ambiante de 60 °C, d'une distance initiale de mandrin à mandrin de 22 $\pm$ 0,05 mm, et d'une vitesse de traction de 5 mm/sec,
dans lequel la déformation mesurée est calculée sur la base de l'équation suivante :

$$\text{déformation } \epsilon = \frac{\text{augmentation de la distance de mandrin à mandrin}}{\text{distance initiale de mandrin à mandrin}},$$

et
la résine comportant au moins trois monomères de tétrafluoroéthylène, d'hexafluoropropylène et de fluorure de vinylidène en tant que monomères constitutifs est un copolymère comportant 15 % en poids à 25 % en poids de fluorure de vinylidène.

2. Tube thermorétractable présentant une déchirabilité selon la revendication 1, comportant une pluralité de fluororésines, dans lequel une différence maximale d'indice de réfraction, mesurée selon ASTM D542, entre la pluralité de fluororésines est de 0,05 ou moins.

3. Tube thermorétractable présentant une déchirabilité selon l'une quelconque des revendications précédentes, dans lequel chacun d'un segment a'b et d'un segment c'd défini par quatre points de coordonnées sur le graphe, a' (0,4, 7,6), b (0,4, 2,4), c' (1,0, 8,9), et d (1,0, 3,2), coupe une courbe de propriété mécanique du tube obtenue par le procédé de mesure.

4. Tube thermorétractable présentant une déchirabilité contenant au moins une fluororésine pouvant être transformée à l'état fondu, dans lequel la fluororésine comporte au moins une résine comportant au moins trois monomères de tétrafluoroéthylène, d'hexafluoropropylène et de fluorure de vinylidène en tant que monomères constitutifs, et la résine comportant au moins trois monomères de tétrafluoroéthylène, d'hexafluoropropylène et de fluorure de vinylidène en tant que monomères constitutifs est contenue en une quantité de 25 % en poids à 95 % en poids,

**caractérisé en ce que**

une déformation du tube est représentée par ε, une contrainte à la déformation est représentée par σ (MPa), un axe horizontal sur un graphique de coordonnées est une déformation ε, un axe vertical sur celui-ci est une contrainte σ, et dans une courbe de propriété mécanique du tube obtenue par un procédé de mesure ci-dessous, la contrainte σ à la déformation ε de 1,0 est de 3,2 MPa ou plus, et

lorsqu'un point de coordonnées à la déformation ε de 1,0 sur la courbe de propriété mécanique est représenté par e et qu'un point de coordonnées à la déformation ε de 2,0 sur la courbe de propriété mécanique est représenté par f,

une pente d'une ligne droite passant par le point de coordonnées e et le point de coordonnées f est de 2,4 à 3,0 Mpa,

(procédé de mesure)

un essai de traction réalisé dans des conditions d'une température ambiante de 60 °C, d'une distance initiale de mandrin à mandrin de 22 $\pm$ 0,05 mm, et d'une vitesse de traction de 5 mm/sec,

dans lequel la déformation mesurée est calculée sur la base de l'équation suivante :

$$\text{déformation } \epsilon = \frac{\text{augmentation de la distance de mandrin à mandrin}}{\text{distance initiale de mandrin à mandrin}},$$

et

la résine comportant au moins trois monomères de tétrafluoroéthylène, d'hexafluoropropylène et de fluorure de vinylidène en tant que monomères constitutifs est un copolymère comportant 15 % en poids à 25 % en poids de fluorure de vinylidène.

5. Tube thermorétractable présentant une déchirabilité selon la revendication 4, comportant une pluralité de fluororésines, dans lequel une différence maximale d'indice de réfraction, mesurée selon ASTM D542, entre la pluralité de fluororésines est de 0,05 ou moins.

Fig. 1

Fig. 2

**EP 3 919 259 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20150354732 A2
- EP 2749802 A1
- JP H08216252 A
- EP 3311982 A1
- EP 0494679 A1